(19) Europäisches Patentamt
European Patent Office
Office européen des brevets

(11) **EP 3 885 966 B1**

(12) **EUROPEAN PATENT SPECIFICATION**

(45) Date of publication and mention
of the grant of the patent:
**28.02.2024 Bulletin 2024/09**

(21) Application number: **19886674.1**

(22) Date of filing: **01.11.2019**

(51) International Patent Classification (IPC):
*G06V 10/80* (2022.01)    *G06V 20/40* (2022.01)
*G06N 3/045* (2023.01)    *G06F 18/25* (2023.01)
*G06F 40/56* (2020.01)    *G06F 40/30* (2020.01)
*G06N 3/08* (2023.01)

(52) Cooperative Patent Classification (CPC):
**G06F 40/56; G06F 18/253; G06F 40/30;
G06N 3/044; G06N 3/045; G06N 3/08;
G06V 10/806; G06V 20/46**

(86) International application number:
**PCT/CN2019/115079**

(87) International publication number:
**WO 2020/103674 (28.05.2020 Gazette 2020/22)**

(54) **METHOD AND DEVICE FOR GENERATING NATURAL LANGUAGE DESCRIPTION INFORMATION**

VERFAHREN UND VORRICHTUNG ZUR ERZEUGUNG VON BESCHREIBUNGSINFORMATIONEN IN NATÜRLICHER SPRACHE

PROCÉDÉ ET DISPOSITIF DE PRODUCTION D'INFORMATIONS DE DESCRIPTION DE LANGAGE NATUREL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.11.2018   CN 201811409084**

(43) Date of publication of application:
**29.09.2021   Bulletin 2021/39**

(73) Proprietor: **Tencent Technology (Shenzhen)
Company Limited
Shenzhen, Guangdong, 518057 (CN)**

(72) Inventors:
• **WANG, Bairui**
  **Shenzhen, Guangdong 518057 (CN)**
• **MA, Lin**
  **Shenzhen, Guangdong 518057 (CN)**
• **FENG, Yang**
  **Shenzhen, Guangdong 518057 (CN)**
• **LIU, Wei**
  **Shenzhen, Guangdong 518057 (CN)**

(74) Representative: **Eisenführ Speiser
Patentanwälte Rechtsanwälte PartGmbB
Postfach 31 02 60
80102 München (DE)**

(56) References cited:
**WO-A1-2018/124309     CN-A- 106 845 443
CN-A- 107 256 221     CN-A- 108 388 900
CN-A- 109 871 736**

• **CHENYANG ZHANG ET AL: "Automatic video
description generation via LSTM with joint
two-stream encoding", 2016 23RD
INTERNATIONAL CONFERENCE ON PATTERN
RECOGNITION (ICPR), IEEE, 4 December 2016
(2016-12-04), pages 2924-2929, XP033086028,
DOI: 10.1109/ICPR.2016.7900081 [retrieved on
2017-04-13]**

**(Cont. next page)**

• CHO KYUNGHYUN ET AL: "Describing Multimedia Content Using Attention-Based Encoder-Decoder Networks", IEEE TRANSACTIONS ON MULTIMEDIA, IEEE, USA, vol. 17, no. 11, 1 November 2015 (2015-11-01), pages 1875-1886, XP011588085, ISSN: 1520-9210, DOI: 10.1109/TMM.2015.2477044 [retrieved on 2015-10-20]

**Description**

This application claims priority to Chinese Patent Application No. 201811409084.9, filed with China National Intellectual Property Administration on November 23, 2018 and titled "METHOD AND DEVICE FOR GENERATING NATURAL LANGUAGE DESCRIPTION INFORMATION".

FIELD

The present disclosure relates to the field of computers, and in particular to a method and an apparatus for generating natural language description.

BACKGROUND

With the continuous development of information technologies, media objects (or media resources) such as pictures, videos, and web pages increase explosively. To help a user to quickly obtain a designated media object, description information may be generated for the media object, and the media object may be retrieved based on the description information.

At present, description information is generated mainly by using an encoder-decoder architecture in the industry. Specifically, a video segment is used as an example. First, features are extracted from each frame of image in the video segment. Then, a frame-level feature is transformed into a video-level feature through by using feature averaging, an attention mechanism, or another method. Finally, the video-level feature serves as input of a decoder to obtain natural language description.

Practically, in the above the method, the natural language description is generated by using a single codec network, resulting in low accuracy in practical applications, and thus being difficult to be widely applied.

According to WO2018/124309A1, a system for generating a word sequence includes one or more processors in connection with a memory and one or more storage devices storing instructions causing operations that include: receiving first and second input vectors, extracting first and second feature vectors, estimating a first set of weights and a second set of weights, calculating a first content vector from the first set of weights and the first feature vectors, and calculating a second content vector, transforming the first content vector into a first modal content vector having a predetermined dimension and transforming the second content vector into a second modal content vector having the predetermined dimension, estimating a set of modal attention weights, generating a weighted content vector having the predetermined dimension from the set of modal attention weights and the first and second modal content vectors, and generating a predicted word using the sequence generator.

SUMMARY

A method and an apparatus for generating natural language description are provided according to embodiments of the present disclosure, to resolve at least a technical problem in the related art that natural language description generated for a media object can only describe the media object with low accuracy.

According to one aspect of the embodiments of the present disclosure, a method for generating natural language description is provided. The method includes: processing a media object by using multiple natural language description models, to obtain first feature vectors outputted by the natural language description models, where the first feature vectors outputted by the natural language description models belong to different feature types; fusing the first feature vectors outputted by the natural language description models, to obtain a second feature vector; and generating target natural language description according to the second feature vector, where the target natural language description expresses the media object in natural language. The media object includes multiple blocks. Each first feature vector in the multiple first feature vectors includes multiple fourth features in one-to-one correspondence with the multiple blocks. The fusing the multiple first feature vectors to obtain a second feature vector includes: extracting multiple feature sets in a one-to-one correspondence with the multiple blocks from the multiple first feature vectors, where each feature set in the multiple feature sets includes a fourth feature corresponding to one of the multiple blocks in the multiple first feature vectors; obtaining an average feature of each feature set in the multiple feature sets, to obtain multiple average features in one-to-one correspondence with the multiple blocks; and determining a feature vector including the multiple average features as the second feature vector.

According to another aspect of the embodiments of the present disclosure, an apparatus for generating natural language description is further provided. The apparatus includes an input module, a fusion module and a generation module. The input module is configured to process a media object by using multiple natural language description models, to obtain first feature vectors outputted by the natural language description models. The first feature vectors outputted by the natural language description models belong to different feature types. The fusion module is configured to fuse the first feature vectors outputted by the natural language description models, to obtain a second feature vector. The generation module is configured to generate target natural language description according to the second feature vector. The target natural language description expresses the media object in natural language. The media object includes multiple blocks. Each of the first feature vectors includes multiple fourth features in one-to-one correspondence with the multiple blocks. The fusion module includes: an extraction unit, configured to extract multiple feature sets in one-to-one correspondence with the multiple blocks from the multiple first feature vectors, where each feature set in the multiple feature sets includes a fourth feature corresponding to one of the multiple blocks in the multiple first feature vectors; a second obtaining unit, configured to obtain an average feature of each feature set in the multiple feature sets, to obtain multiple average features in a one-to-one correspondence with the multiple blocks; and a determining unit, configured to determine a feature vector including the multiple average features as the second feature vector.

According to another aspect of the embodiments of the present disclosure, a storage medium is further provided. The storage medium stores a computer program, and the computer program is executed to perform the method described above.

According to another aspect of the embodiments of the present disclosure, an electronic device is further provided. The electronic device includes a memory and a processor. The memory stores a computer program, and the processor is configured to perform the method described above by executing the computer program.

In the embodiments of the present disclosure, the media object is processed with multiple natural language description models; the first feature vectors belonging to different feature types extracted by the models are fused into the second feature vector; and target natural language description is generated according to the second feature vector to represent the media object. According to the above solution, different types of information with a semantic complementary characteristic is integrated in the media object to jointly generate the target natural language description for the media object, so that the generated target natural language description more accurately reflects content of the media object, thereby realizing a technical effect of improving accuracy of description of the media object expressed by the natural language description generated for the media object, and thus resolving the technical problem in the related art that the natural language description generated for the media object can only describe the media object with low accuracy.

BRIEF DESCRIPTION OF THE DRAWINGS

The accompanying drawings described herein are used to provide a further understanding of the present disclosure, and form a part of the present disclosure. Exemplary embodiments of the present disclosure and descriptions thereof are used to explain the present disclosure. In the accompanying drawings:

FIG. 1 is a schematic diagram of an optional method for generating natural language description according to an embodiment of the present disclosure.
FIG. 2 is a schematic diagram of an application environment of an optional method for generating natural language description according to an embodiment of the present disclosure.
FIG. 3 is a schematic diagram of an optional method for generating natural language description according to an optional implementation of the present disclosure.
FIG. 4 is a schematic diagram of another optional method for generating natural language description according to an optional implementation of the present disclosure.
FIG. 5 is a schematic diagram of another optional method for generating natural language description according to an optional implementation of the present disclosure.
FIG. 6 is a schematic diagram of another optional method for generating natural language description according to an optional implementation of the present disclosure.
FIG. 7 is a schematic diagram of another optional method for generating natural language description according to an optional implementation of the present disclosure.
FIG. 8 is a schematic diagram of an optional apparatus for generating natural language description according to an embodiment of the present disclosure.
FIG. 9 is a schematic diagram of an application scenario of an optional method for generating natural language description according to an embodiment of the present disclosure.
FIG. 10 is a schematic diagram of an optional electronic device according to an embodiment of the present disclosure.

DETAILED DESCRIPTION OF EMBODIMENTS

To make a person skilled in the art better understand solutions of the present disclosure, the technical solutions in the embodiments of the present disclosure are clearly and completely described below with reference to the accompanying drawings in the embodiments of the present disclosure.

The terms such as "first" and "second" in the specification, the claims, and the foregoing accompanying drawings of the present disclosure are intended to distinguish between similar objects, but are not necessarily used for describing a particular sequence or a chronological order. It is to be understood that the data described in such a way are interchangeable in proper circumstances, so that the embodiments of the present disclosure described herein can be implemented in orders other than the order illustrated or described herein. Moreover, the terms "include", "comprise" and any other variants thereof are intended to be nonexclusive. For example, a process, method, system, product, or device that includes a list of steps or units is not necessarily limited to those expressly listed steps or units, but may include other steps or units not expressly listed or inherent to such a process, method, product, or device.

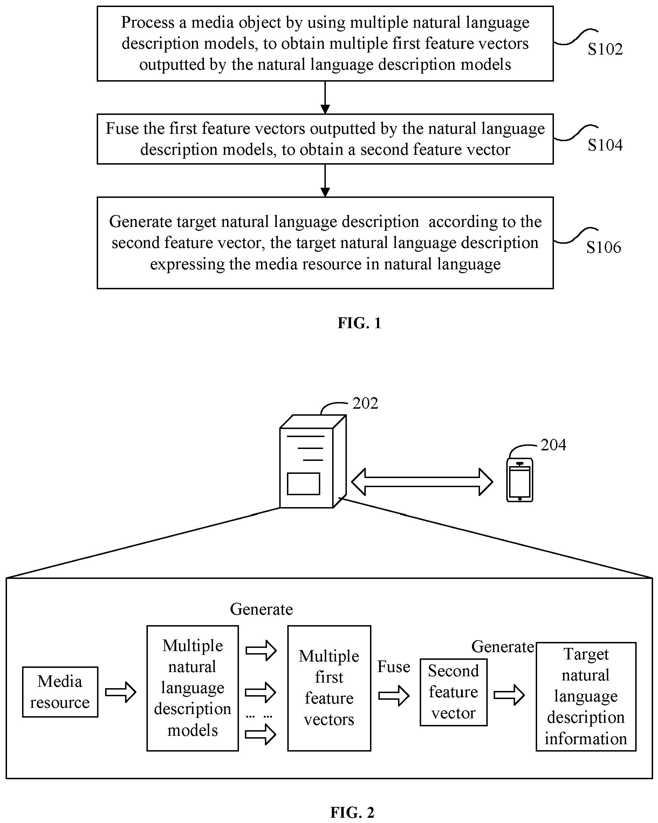

According to one aspect of the embodiments of the present disclosure, a method for generating natural language description is provided. As shown in FIG. 1, the method includes the following steps S102 to S106.

In S102, a media object is processed by using multiple natural language description models, to obtain first feature vectors outputted by the natural language description models. The first feature vectors outputted by the natural language description models belong to different feature types.

Each of the multiple natural language description models is configured to generate natural language description according to input information, and the natural language description expresses the input information of the natural language description model in natural language.

In S104, the first feature vectors outputted by the natural language description models are fused, to obtain a second feature vector.

In S106, target natural language description is generated according to the second feature vector. The target natural language description expresses the media object in natural language.

Optionally, in this embodiment, the foregoing method for generating natural language description may be applied to a hardware environment formed by a server 202 and a client 204 shown in FIG. 2. As shown in FIG. 2, the server 202 processes a media object by using multiple natural language description models and obtains a first feature vector outputted by each natural language description model, to obtain multiple first feature vectors. Each first feature vector belongs to one feature type, and different first feature vectors belong to different feature types. That is, the server 202 may obtain first feature vectors belonging to multiple feature types. Then, the server 202 fuses the first feature vectors belonging to multiple feature types to obtain a second feature vector, and generates target natural language description according to the second feature vector. The target natural language description expresses the media object in natural language.

Optionally, in this embodiment, the server 202 may perform operations such as classification, viewing, and retrieval on the media object according to the target natural language description. In this way, services are provided for the client 204.

Optionally, in this embodiment, the foregoing method for generating natural language description may be applied to, but is not limited to, a scenario of generating natural language description for a media object. The client may be, but is not limited to, various types of applications, applets, websites, and the like, and may be, for example, of an online education type, an instant messaging type, a community space type, a game type, a shopping type, browsers, a finance type, a multimedia type, and a live broadcast type. Specifically, the client may be applied to, but is not limited to, a scenario of generating natural language description for a media object in the foregoing multimedia application, or may further be applied to, but is not limited to, a scenario of generating natural language description for a media object in the foregoing instant messaging application, to improve accuracy of description of the media object expressed by the natural language description generated for the media object. The foregoing description is merely exemplary, and types of the client are not limited in this embodiment.

Optionally, in this embodiment, the media object may include, but is not limited to: a video resource, an audio resource, a picture resource, a webpage resource, and the like.

Optionally, in this embodiment, each first feature vector in the multiple first feature vectors includes one or more features for representing the media object. The second feature vector fused by the multiple first feature vectors includes one or more features for representing the media object.

Optionally, in this embodiment, the natural language description may include, but is not limited to, a sentence, a phrase, a word group, and the like in various languages. The languages may be, for example, English, Chinese, Spanish, French, Italian, and Arabic.

Optionally, in this embodiment, the multiple natural language description models are different natural language description models trained separately, and can describe the media object from different angles, so that the second feature vector obtained by fusing the multiple first feature vectors generated by the multiple natural language description models can carry comprehensive information of the media object, thereby describing the media object more accurately with the target natural language description .

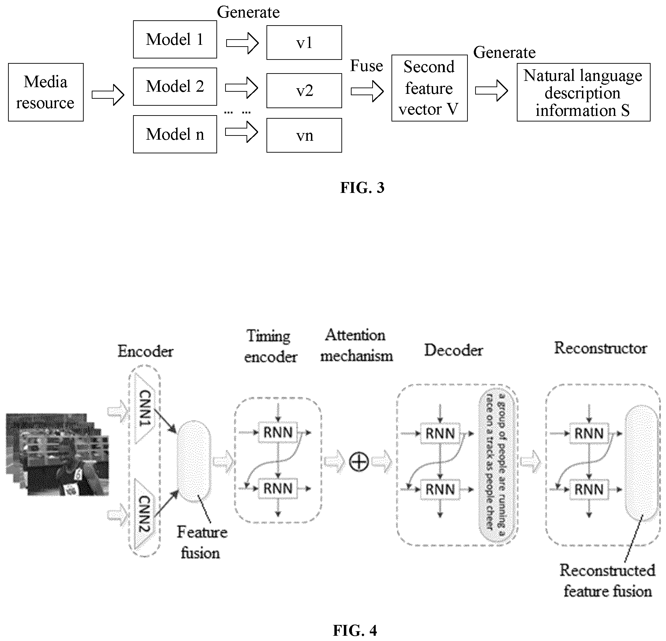

In an optional implementation, an example in which the media object is a video resource is used. As shown in FIG. 3, multiple natural language description models are trained, which are respectively: a model 1, a model 2, ..., and a model n. The video resource is processed by using the model 1, the model 2, ..., and the model n, to obtain multiple first feature vectors (v1, v2,..., and vn) belonging to multiple feature types outputted by the model 1, the model 2, ..., and the model n. v1, v2, ..., and vn are fused into a second feature vector V, and natural language description S is generated according to the second feature vector V.

It can be seen from the above steps that, the natural language description model is configured to generate the natural language description according to the input information, to describe input information of the model. The natural language description is generated by using the feature vector extracted from the input information. Multiple natural language description models are adopted, and the first feature vectors belonging to different feature types extracted by the models are fused into the second feature vector; and then target natural language description is generated according to the second feature vector to represent the media object, so as to integrate different types of information in the media object to jointly generate the target natural language description for the media object, so that the generated target natural language description more accurately reflects content of the media object. Therefore, a technical effect of improving accuracy of description of the media object expressed by the natural language description generated for the media object is realized, and thus a technical problem in the related art that the natural language description generated for the media object can only express the media object with low accuracy is resolved.

In an optional solution, the operation of processing a media object by using multiple natural language description models, to obtain first feature vectors outputted by the natural language description models includes the following steps S1 to S3.

In S1, a media object is obtained, and a resource block included in the media object is determined.

In S2, the resource block is inputted into each natural language description model of multiple natural language description models.

In S3, one first feature vector is generated by using each natural language description model of the multiple natural language description models. The one first feature vector includes a first feature corresponding to the resource block.

Optionally, in this embodiment, the resource block included in the media object may be, but is not limited to, any manner of dividing the media object. The media object may include, but is not limited to, one or more resource blocks. A video resource is used as an example, a resource block of the video resource may be, but is not limited to be, divided according to frames. One resource block may include, but is not limited to, one or more video frames. Alternatively, the resource block of the video resource may be, but is not limited to be, divided according to time. One resource block may be, but is not limited to, a video segment that lasts for one or more seconds. A picture resource is used as an example. A resource block of the picture resource may be, but is not limited to be, divided according to pixels. One resource block may be, but is not limited to, a picture area including one or more pixels. Alternatively, the resource block of the picture resource may be, but is not limited to be, divided according to sizes. One resource block may be, but not limited to, a picture area with a predetermined size.

Optionally, in this embodiment, each natural language description model generates a first feature for each resource block, so that each natural language description model generates the first feature corresponding to the resource block for the media object, to obtain a first feature vector including the first features.

In an optional solution, the media object includes multiple resource blocks, and the process of generating one first feature vector by using each natural language description model of the multiple natural language description models includes the following steps S1 to S3.

In S1, the multiple resource blocks are processed by using a feature extraction model included in each natural language description model. The feature extraction model is configured to extract the first feature from each of the resource blocks, to obtain multiple first features.

In S2, sequence information of the multiple resource blocks is obtained. The sequence information indicates a sequence of the multiple resource blocks in the media object.

In S3, the multiple first features are encoded sequentially according to the sequence information, to obtain the first feature vector.

Optionally, in this embodiment, the sequence information may include, but is not limited to: timing information, location sequence information, spatio-temporal sequence information, and the like. The timing information may indicate a time sequence of multiple resource blocks in a media object. The location sequence information may indicate an arrangement sequence of multiple resource blocks in a media object. The spatio-temporal sequence information may indicate an arrangement sequence in time and space of multiple resource blocks in a media object. For example, in a video resource processing scenario, timing information of a video frame may be used for encoding; and in an image resource processing scenario, a location sequence of different areas may be used for encoding.

Optionally, in this embodiment, sequential encoding may include, but is not limited to: timing encoding, spatial encoding, spatio-temporal encoding, and the like.

Optionally, in this embodiment, the multiple first features are extracted from the multiple resource blocks of the media object. The first features may be out of order. Sequence information of the multiple resource blocks is obtained from the media object. The first feature vector obtained by sequentially encoding the first features according to the sequence information can carry the sequence information of the multiple resource blocks, and can reflect an arrangement sequence of the multiple first features in the media object.

In an optional implementation, a process of generating natural language description of a video resource is used as an example. As shown in FIG. 4, for a video segment with m frames of images, encoders of all natural language description models obtain different types of features of each frame of image: $V^i = \{v_1^i, v_2^i, ..., v_m^i\}$, $V^j = \{v_1^j, v_2^j, ..., v_m^j\}$, where i and j represent different types of features. Features of the same image are fused to obtain a fused image feature sequence $V = \{v_1, v_2, ..., v_m\}$. Subsequently, a timing encoder performs timing encoding on the feature sequence at this stage, and fuses timing information of the video segment into the image feature sequence. Before the decoder generates a description, a specific weight is assigned to each image feature according to an attention mechanism. A weighted sum of the feature sequence is a feature expression of the video segment. The decoder uses the video feature expression generated at this stage as input, and generates a corresponding natural language description in a form of predicting one word at each step. After the natural language description is generated, a reconstructor reconstructs an input video feature according to a hidden state of the decoder at each step, that is, $\tilde{V} = \{\tilde{v}_1, \tilde{v}_2, ..., \tilde{v}_m\}$. In the training process, with a "self-evaluation" method for reinforcement learning, an index for evaluating quality of sentences is directly used as an optimization target, to train a model. In an application, multiple natural language description models that have been trained are fused at a prediction end of the decoder. A second feature vector is obtained according to multiple first feature vectors, to jointly generate the same piece of target natural language description.

In an optional solution, each natural language description model may include multiple feature extraction models, and the feature extraction models belong to different feature types. The operation of processing multiple resource blocks by using a feature extraction model included in each natural language description model includes the following steps S1 and S2.

In S1, the multiple resource blocks are inputted into the feature extraction models included in each natural language description model, and a set of second features outputted by each of the feature extraction models are obtained, to obtain multiple sets of second features. Each set of second features in the multiple sets of second features include features in a one-to-one correspondence with the resource blocks.

In S2, features corresponding to the same resource block in the multiple sets of second features are fused into one feature, to obtain multiple first features.

Optionally, in this embodiment, the multiple feature extraction models may be, but are not limited to, multiple types of convolutional neural networks, such as P3D, C3D, and I3D, to perform feature extraction on each frame of image.

Optionally, in this embodiment, different features, such as a C3D feature and a P3D feature, are extracted from a video by using an algorithm or a network referred to as C3D or P3D. Such algorithms or networks may be used to classify images or videos. Such models process images or videos and can output category information. Intermediate output of such classification models may be extracted as features of images or videos. For different algorithms or network models, methods for extracting features are different, efficiencies are different, and extracted features are also different. Therefore, different algorithms or network models may be used to extract different types of features.

Optionally, in this embodiment, the feature may include, but not limited to, two types of features: 2D convolution features and 3D convolution features. The 2D convolution feature such as an InceptionV4 feature, a Resnet152 feature, an Inception_Resnet_v2 feature, a nasnet feature, and a pnasnet feature, may act on a single image to extract a feature of the single image. The 3D convolution feature such as a C3D feature, a P3D feature, and an I3D feature, may act on multiple consecutive images. Extracted features include timing information of the pictures, and content of the extracted features of the 3D convolution features may be richer than that of the 2D convolution features.

In an optional implementation, in a case that multiple types of image features (that is, multiple sets of second features) are obtained, two feature fusion strategies may be used: one is a direct feature cascading method, and the other is a method in which dimension reduction is first performed on features, and then the features are cascaded.

Herein, two types of features, that is, I3D features and P3D features, are used as an example to illustrate the two feature fusion strategies. Herein,

$$V^i = \{v_1^i, v_2^i, ..., v_m^i\}$$ represents an I3D feature sequence, and a length of each feature is 1024 dimensions.

$$V^j = \{v_1^j, v_2^j, ..., v_m^j\}$$ represents a P3D feature sequence, and a length of each feature is 2048 dimensions.

For the direct feature cascading method, features corresponding to the same frame or area in different feature sequences are connected in a length dimension:

$$v_t = \left[v_t^i, v_t^j\right]$$

The above formula represents a direct cascade of two different features in a t-th frame or a t-th area. Herein, a length dimension of $v_t$ is 3072 dimensions.

For the method in which dimension reduction is first performed on features, and then the features are cascaded, a high dimensional feature is reduced to a target dimensional feature by using a linear layer such as an FC layer:

$$v_t^i \sim FC\left(v_t^i\right)$$

$$v_t^j \sim FC\left(v_t^j\right)$$

Then, corresponding features in different feature sequences are connected in a length dimension.

$$v_t = \left[FC\left(v_t^i\right), FC\left(v_t^j\right)\right]$$

The above formula represents that two different dimension-reduced features in the t-th frame or the t-th area are cascaded. Herein, a length dimension of $v_t$ is twice a target dimension.

In an optional solution, the process of encoding the multiple first features sequentially according to the sequence information, to obtain the first feature vector includes the following steps S1 to S4.

In S1, the first features are inputted into a sequential encoder in the sequence.

In S2, a timing feature vector is generated by using the sequential encoder.

In S3, the timing feature vector is processed by using an attention mechanism model, to obtain multiple third features. The attention mechanism model is configured to determine a weighted feature corresponding to each resource block according to a correlation between each resource block and a resource feature.

In S4, the multiple third features are processed by using a decoder model included in each natural language description model. The decoder model is configured to generate the first feature vector according to the multiple third features.

Optionally, in this embodiment, the sequential encoder may include, but is not limited to: a timing encoder and the like.

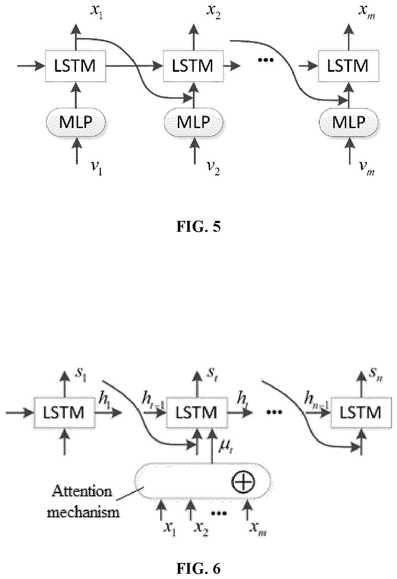

In an optional embodiment, the timing encoder may include a multi-layer perceptron and a recurrent neural network. The neural network may be a common recurrent neural network RNN unit, a long short-term memory (LSTM) unit, a gated recurrent unit (GRU), and the like. An LSTM unit is used as an example. As shown in FIG. 5, the fused feature sequence obtained at the previous stage does not include a timing relationship between two or more features. The timing encoder reads the feature sequence in a correct order into a multi-layer perceptron MLP for the first time, further dimensionality reduction is performed on the feature sequence, and then the processed feature sequence is inputted into the LSTM unit. The timing encoder outputs one state corresponding to an input feature at each step. The state indicates a feature expression obtained after the timing information is embedded into the input feature at this time instant:

$$x_t = \text{LSTM}(v_i, x_{t-1})$$

In which, $x_t$ not only represents a hidden state of an LSTM network at a time instant t, but also represents an image feature expression obtained after timing encoding is performed at this time instant. Finally, a feature sequence $X = \{x_1, x_2, ..., x_m\}$ containing timing information is obtained.

In the above optional implementation, as shown in FIG. 6, the decoder may include a recurrent neural network, to generate natural language description in units of words. In order to focus on capturing an image feature related to a word by the decoder during a process of generating the word at each step, an attention mechanism is introduced to dynamically determine and select a key image feature. According to the attention mechanism, a relatively large feature weight is assigned to a currently important feature, and a relatively small feature weight is assigned to a less important feature. After features are integrated according to the attention mechanism, an integrated feature of the video at the current time instant is obtained as follows:

$$\mu_t = \sum_{i=1}^{m} \alpha_i^t x_i$$

In which, $\alpha_i^t$ represents a feature weight assigned to an image feature $x_i$ at the time instant t according to the attention mechanism, and meets $\sum_{i=1}^{m} \alpha_i^t = 1$; $\mu_t$ represents a feature obtained after dynamic selection and integration is performed according to the attention mechanism; and $s_i \in S = \{s_1, s_2, ..., s_n\}$ represents an i-th word in a sentence S.

At each time instant, the decoder obtains a word predicted at the current time instant according to the following formula:

$$h_t = \text{LSTM}(s_{i-1}, h_{t-1}, \mu_t)$$

$$s_t = \max\bigl(\text{SoftMax}(h_t)\bigr)$$

In which, $h_t$ represents a t-th hidden state of a decoder network, $s_t \in S = \{s_1, s_2, ..., s_n\}$ represents a t-th word in the sentence S, and SoftMax() is a function for obtaining a word probability distribution. In a training process, a loss function of the decoder is:

$$\mathcal{L}_{dec} = \sum_{i=1}^{N} \bigl\{-\log P\bigl(S^i | V^i;\ \theta\bigr)\bigr\}$$

In which, $P(S^i | V^i;\ \theta)$ represents a probability of generating a natural language description for a video segment, and $\theta$ represents a to-be-optimized parameter of the network.

The media object includes multiple resource blocks, each first feature vector in the multiple first feature vectors includes multiple fourth features in a one-to-one correspondence with the multiple resource blocks. The process of fusing the multiple first feature vectors to obtain a second feature vector includes the following steps S1 to S3.

In S1, multiple feature sets in a one-to-one correspondence with the multiple resource blocks are extracted from the multiple first feature vectors. Each feature set in the multiple feature sets includes a fourth feature corresponding to one of the multiple resource blocks in the multiple first feature vectors.

In S2, an average feature of each feature set in the multiple feature sets is obtained, to obtain multiple average features in a one-to-one correspondence with the multiple resource blocks.

In S3, a feature vector including the multiple average features is determined as the second feature vector.

An average feature of a hidden state sequence $H = \{h_1, h_2, \ldots, h_n\}$ of each decoder is obtained according to the resource blocks, that is, an average feature of all $h_1$ is obtained, an average feature of all $h_2$ is obtained, ..., and an average feature of all $h_n$ is obtained. The obtained average features are determined as features included in the second feature vector.

In an optional solution, the media object includes a first quantity of resource blocks, and the second feature vector includes a first quantity of features corresponding to the first quantity of resource blocks. The process of generating target natural language description according to the second feature vector includes the following steps S1 and S2.

In S1, the first quantity of features are processed by using an objective function, to obtain a second quantity of words that maximize the objective function. The objective function is a function for obtaining a word probability distribution.

In S2, the second quantity of words are integrated into a sentence, and the sentence is determined as the target natural language description.

Optionally, in this embodiment, the first quantity may be the same as or differs from the second quantity. That is, the first quantity of features are unnecessary to be in a one-to-one correspondence with the second quantity of words.

Optionally, in this embodiment, the sentence integrated according to the second quantity of words may be in a form of, but not limited to, a sentence, a word group, a phrase, and the like. In other words, the sentence may be in a form of a sentence with a subject-predicate-object structure, a sentence with a subject-predicate-object-attributive-adverbial-complement structure, a phrase with a predicate-object structure, or the like.

Optionally, in this embodiment, the objective function is a function for obtaining a word probability distribution, for example, a function SoftMax().

In an optional solution, before the operation of processing a media object by using multiple natural language description models, to obtain first feature vectors outputted by the natural language description models, the method further includes the following steps S1 to S3.

In S1, each model of multiple initial natural language description models is trained by using a resource sample, to obtain multiple first models whose first loss function meets a first preset condition. The first loss function is configured according to the each model of the multiple initial natural language description models.

In S2, each joint model of multiple joint models is trained by using the resource sample, to obtain multiple second models whose second loss function meets a second preset condition. Each joint model of the multiple joint models is obtained by cascading one of the first models and a reconstructor model. The reconstructor model is configured to reconstruct a feature of the resource sample according to a description result outputted by an optimized model, and the second loss function is configured according to each joint model.

In S3, the multiple second models are trained, to obtain multiple natural language description models whose evaluation parameter meets a third preset condition.

The initial natural language description model, the joint model, and the second model can be optimized by training the initial natural language description model, the joint model, and the second model by using the resource sample. When a loss function or another evaluation parameter of the above models meets a respective preset condition, the training may be stopped.

The preset condition may be set according to actual requirements. For example, the preset condition may be that: the loss function or the evaluation parameter is in a state of convergence. In another example, the preset condition may be that: the loss function or the evaluation parameter is less than a preset threshold.

Optionally, in this embodiment, the model training process may include, but is not limited to three parts as follows.

In a first part, a model without a reconstructor is trained by using a conventional training method, to minimize a loss function $\mathcal{L}_{dec}$ of the decoder.

In a second part, when the training of the model in the first part is completed, a reconstructor is added, and then training is performed by using the conventional method, to minimize a joint loss function $\mathcal{L} = \mathcal{L}_{dec} + \mathcal{L}_{rec}$.

In a third part, when the training of the model in the second part is completed, the model is further trained by using the "self-evaluation" method for reinforcement learning, to optimize a METEOR value. The METEOR value is a non-differentiable index for evaluating quality of natural sentences. Since a gradient of the METEOR is unobtainable, a conventional training method for obtaining a gradient of a loss function and then updating a parameter by using gradient descent is no longer used herein. The reinforcement learning algorithm can exactly resolve this problem. Generally, an optimization target of reinforcement learning based on a "bottom line" may be expressed as:

$$\min_{\theta}\left(-r\left(S^i\right) + b\right).$$

In which, r(S')is an optimization index, a "bottom line" b is any function irrelevant to $S^i$, which is introduced to reduce a high deviation of gradient estimation for a single sample. By using the "self-evaluation" method, the "bottom line" b is the METEOR value obtained by the model during a verification stage, that is, $b = r(\hat{S}^i)$. In which, $\hat{S}^i$ is natural language description generated by the current model during the verification stage. In this method, optimization is performed by using its own indicator $r(\hat{S}^i)$ as a "bottom line", and thus the method is referred to as "self-evaluation."

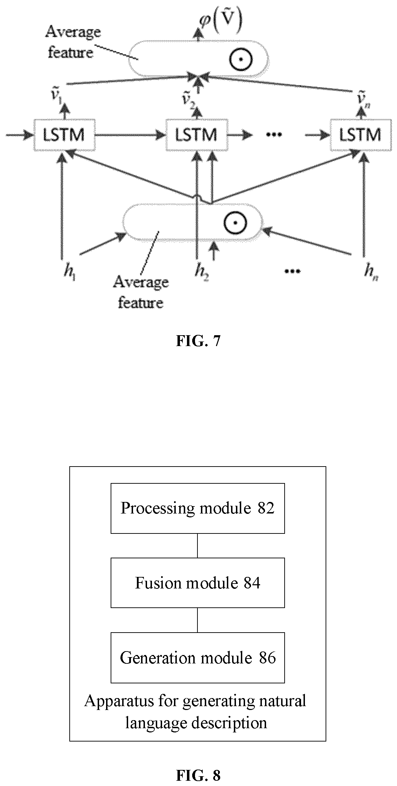

In an optional implementation, a reconstructor network may include a recurrent neural network. The reconstructor reconstructs a global feature of the video by using a hidden state sequence H = {$h_1$, $h_2$, ..., $h_n$} of the decoder. As shown in FIG. 7, before the global feature of the video is reconstructed, an average feature of the hidden state sequence H = {$h_1$, $h_2$, ..., $h_n$} of the decoder is obtained, to obtain a global expression of a predicted natural language description as follows:

$$\varphi(\mathrm{H}) = \frac{1}{n}\sum_{i=1}^{n} h_i$$

In which, $\varphi(\cdot)$ represents a feature averaging operation. At each time instant, the reconstructor generates a new hidden state $\tilde{v}_t$. by using the average feature, a currently corresponding decoder state $h_t$, and a state $\tilde{v}_{t-1}$ at a previous time instant as input. In addition, the hidden state also serves as a reconstructed feature for the current time instant.

$$\tilde{v}_t = \mathrm{LSTM}(\tilde{v}_{t-1}, h_t, \varphi(\mathrm{H}))$$

$$\varphi(\tilde{\mathrm{V}}) = \frac{1}{n}\sum_{t=1}^{n} \tilde{v}_t$$

Finally, the average feature is used for the hidden state sequence $\tilde{V} = \tilde{v}_1, \tilde{v}_2, ..., \tilde{v}_n$} of the reconstructor, to obtain a feature expression $\varphi(\tilde{V})$ representing a global structure of the video segment.

A Euclidean distance between an original video feature and a reconstructed video feature serves as a loss function of the reconstructor network, and is expressed as:

$$\mathcal{L}_{rec} = \mathrm{E}\left(\varphi(\tilde{\mathrm{V}}), \varphi(\mathrm{V})\right).$$

Herein, E($\cdot$) represents the Euclidean distance.

To simplify the description, the foregoing method embodiments are described as combinations of a series of actions. However, a person skilled in the art shall understand that that the present disclosure is not limited to the described sequence of the actions, and some steps may be performed in another sequence or may be simultaneously performed according to the present disclosure. In addition, a person skilled in the art shall understand that all the embodiments described in the specification are preferred embodiments, and the related actions and modules are not necessarily essential to the present disclosure.

According to another aspect of the embodiments of the present disclosure, an apparatus for generating natural language description for implementing the method for generating natural language description is further provided. As shown in FIG. 8, the apparatus includes: a processing module 82, a fusion module 84 and a generation module 86.

The processing module 82 is configured to process a media object by using multiple natural language description models, to obtain first feature vectors outputted by the natural language description models. The first feature vectors outputted by the natural language description models belong to different feature types.

The fusion module 84 is configured to fuse the first feature vectors outputted by the natural language description models, to obtain a second feature vector.

The generation module 86 is configured to generate target natural language description according to the second feature vector. The target natural language description expresses the media object in natural language.

In an optional solution, the processing module includes: a first obtaining unit, a first input unit and a generation unit.

The first obtaining unit is configured to obtain the media object, and determine a resource block included in the media object.

The first input unit is configured to input the resource block into each natural language description model of the multiple natural language description models.

The generation unit is configured to generate one first feature vector by using each natural language description model of the multiple natural language description models. The one first feature vector includes a first feature corresponding to the resource block.

In an optional solution, the media object includes multiple resource blocks. The generation unit includes: a processing subunit, an obtaining subunit and an encoding subunit.

The processing subunit is configured to process the multiple resource blocks by using a feature extraction model included in each natural language description model. The feature extraction model is configured to extract the first feature from each of the resource blocks, to obtain multiple first features.

The obtaining subunit is configured to obtain sequence information of the multiple resource blocks. The sequence information indicates a sequence of the multiple resource blocks in the media object.

The encoding subunit is configured to sequentially encode the multiple first features according to the sequence information, to obtain the first feature vector.

In an optional solution, each natural language description model includes multiple feature extraction models, and the feature extraction models belong to different feature types. The processing subunit is configured to:

input the multiple resource blocks into the feature extraction models included in each natural language description model, and obtain a set of second features outputted by each of the feature extraction models, to obtain multiple sets of second features, where each set of second features in the multiple sets of second features include features corresponding to the multiple resource blocks; and

fuse features corresponding to the same resource block in the multiple sets of second features into one feature, to obtain multiple first features.

In an optional solution, the encoding subunit is configured to:

input the first feature into a sequential encoder in the sequence;

generate a timing feature vector by using the sequential encoder;

process the timing feature vector by using an attention mechanism model, to obtain multiple third features, where the attention mechanism model is configured to determine a weighted feature corresponding to each resource block according to a correlation between each resource block and a resource feature; and

process the multiple third features by using a decoder model included in each natural language description model, where the decoder model is configured to generate the first feature vector according to the multiple third features.

The media object includes multiple resource blocks, and each first feature vector in the multiple first feature vectors includes multiple fourth features in a one-to-one correspondence with the multiple resource blocks. The fusion module includes: an extraction unit, a second obtaining unit and a determination unit.

The extraction unit is configured to extract multiple feature sets in a one-to-one correspondence with the multiple resource blocks from the multiple first feature vectors. Each feature set in the multiple feature sets includes a fourth feature corresponding to one of the multiple resource blocks in the multiple first feature vectors.

The second obtaining unit is configured to obtain an average feature of each feature set in the multiple feature sets, to obtain multiple average features in a one-to-one correspondence with the multiple resource blocks.

The determining unit is configured to determine a feature vector including the multiple average features as the second feature vector.

In an optional solution, the media object includes a first quantity of resource blocks, and the second feature vector includes a first quantity of features corresponding to the first quantity of resource blocks. The generation module includes: a processing unit and an integration unit.

The processing unit is configured to process the first quantity of features by using an objective function, to obtain a second quantity of words that maximize the objective function. The objective function is a function for obtaining a word probability distribution.

The integration unit is configured to integrate the second quantity of words into a sentence, and determine the sentence as the target natural language description.

In an optional solution, the apparatus further includes: a first training module, a second training module and a third training module.

The first training module is configured to train each model of multiple initial natural language description models by using a resource sample, to obtain multiple first models whose first loss function meets a first preset condition. The first loss function is configured according to each model of the multiple initial natural language description models.

The second training module is configured to train each joint model of multiple joint models by using the resource sample, to obtain multiple second models whose second loss function meets a second preset condition. Each joint model of the multiple joint models is obtained by cascading one of the first models and a reconstructor model. The reconstructor model is configured to reconstruct a feature of the resource sample according to a description result outputted by the first model, and the second loss function is configured according to each joint model.

The third training module is configured to train the multiple second models, to obtain multiple natural language description models whose evaluation parameter meets a third preset condition.

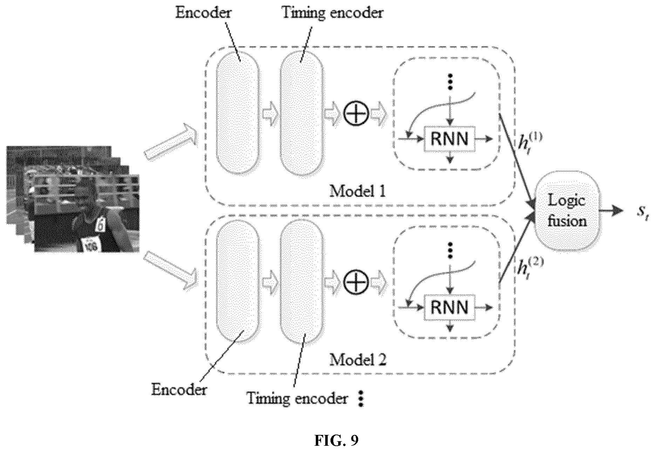

In an optional embodiment, the foregoing method for generating natural language description may be applied to, but is not limited to, a scenario of generating natural language description for a media object as shown in FIG. 9. In this scenario, a method for generating video segment description information based on video timing information and multi-scale fusion is provided. This method may be applied to a cloud to generate a natural language paragraph description for a video segment in a database. With the method, fusion, extraction and reconstruction of video segment features, encoding of timing information, and generation of a natural language description may be performed over a neural network.

In this scenario, the image encoder extracts a convolutional neural network feature for each frame of image of the video segment, and processes the feature by using a recurrent neural network (a timing encoder), to obtain an image feature expression including timing information of the video segment. The image feature expression including the timing information that is extracted at this stage is further processed by using a non-linear network, to obtain a video segment feature expression carrying key frame information. Then, a natural language description for the video segment feature is generated by using the recurrent neural network (the decoder), and a feature of the input video is reconstructed by using another recurrent neural network (the reconstructor) according to the description generated at this stage. The generation of the natural language description is restricted by reducing a difference between the reconstructed video feature and an original video feature. Then, the description generation network is further trained by using a "self-evaluation" structure in a reinforcement learning algorithm. Finally, multiple networks that have been trained are fused at a word prediction end, to generate a more accurate video segment description. By means of the above process, an accurate natural language description can be generated for the video segment, so that the video segment can be effectively understood and analyzed.

In this scenario, different types of features of the same video segment are fused by using a convolutional neural network. The advantage of fusing features is that complementary semantic information in different features can be utilized at the same time. A timing encoder is constructed by using the capability of the recurrent neural network to process timing data. The timing encoder further processes an image feature generated by the encoder, fuses video timing information into the image feature, and makes full use of the timing information provided by a video sequence. The reconstructor is established by using the recurrent neural network to obtain backward semantic information in the training data. Training is performed by using the "self-evaluation" structure in the reinforcement learning algorithm, an index concerned is directly optimized, thereby being beneficial to further improvement of performances. For the multiple models that have been trained, prediction results of the multiple models are fused during application, and a more accurate natural language description for the video segment is generated with respective characteristics of different models.

By using the above method, video content understanding services can be provided. In a background server, the encoder extracts different types of features from each frame of image of the video, and performs feature fusion. Then, a fused feature is processed by the timing encoder to obtain a high-level image feature sequence embedded with the video timing information, and a natural language description is obtained by using the decoder. In addition, the natural language description is reconstructed as an inputted video feature by using the reconstructor network. In the entire process, training is performed by using the "self-evaluation" structure in the reinforcement learning algorithm. Finally, multiple models that have been trained are fused at prediction ends to generate a natural language description. The models may be deployed on video websites for video classification, viewing and quick retrieval.

In an optional implementation, as shown in FIG. 9, for the multiple models trained by using the above solution, since the models are trained by using different types and quantities of features and the models focus on different aspects of performance, descriptions generated by the multiple models for the same video segment are different. Multiple models are fused to generate the same natural language description, so that advantages that different models focus on different aspects can be attained, thereby causing the description to be more accurate. In application, decoder prediction ends are fused, and one word is collectively generated at each time instant.

At the same time instant, decoder states of the multiple models are fused as follows:

$$h_t = \frac{1}{q} \sum_{k=1}^{q} h_t^{(k)}$$

$$s_t = \max\big(\text{SoftMax}(h_t)\big)$$

An average value of different decoder states at the same time instant is calculated. In which, $h_t^{(k)}$ represents a decoder state of a k-th model at a time instant t, and q represents a quantity of models. For an averaged decoder state $h_t$, a probability distribution of a word list is obtained by using a SoftMax function, to further obtain a word $s_t$ at the time instant t. At a time instant t+1, $s_t$ serves as common input of multiple model decoders.

Through the above process, information of multiple types of features, the timing information in the video segment, and bidirectional information between the video segment and the natural language description can be effectively obtained at the same time, and the natural language description is generated by using multiple models, thereby effectively improving the video description capabilities. In addition, the generated video description can be used for video classification, viewing, and quick retrieval, thereby having potential economic benefits.

In addition to the above method for generating video description information, other methods for fusing multiple types of video features, encoding video timing information by using the recurrent neural network, and fusing multiple types of models that have been trained to improve accuracy of video description also fall within the protection scope of this embodiment.

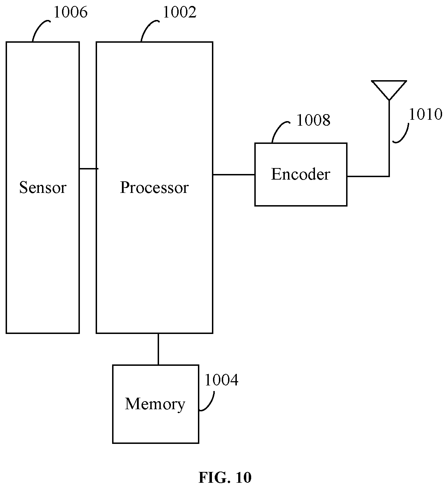

According to still another aspect of the embodiments of the present disclosure, an electronic device for performing the foregoing method for generating natural language description is further provided. As shown in FIG. 10, the electronic device includes: one or more (only one is shown in the figure) processors 1002, a memory 1004, a sensor 1006, an encoder 1008, and a transmission apparatus 1010. The memory stores a computer program, and the processor is configured to perform the steps in any one of the foregoing method embodiments by executing the computer program.

Optionally, in this embodiment, the electronic device may be located in at least one of multiple network devices in a computer network.

Optionally, in this embodiment, the processor may be configured to perform the following steps S1 to S3 by executing the computer program.

In S 1, a media object is processed by using multiple natural language description models, to obtain first feature vectors outputted by the natural language description models. The first feature vectors outputted by the natural language description models belong to different feature types.

In S2, the first feature vectors outputted by the natural language description models are fused, to obtain a second feature vector.

In S3, target natural language description is generated according to the second feature vector. The target natural language description expresses the media object in natural language.

Optionally, a person of ordinary skill in the art may understand that, the structure shown in FIG. 10 is only illustrative. The electronic device may be a terminal device such as a smartphone (for example, an Android mobile phone or an iOS mobile phone), a tablet computer, a palmtop computer, a mobile Internet device (MID), or a PAD. FIG. 10 does not limit the structure of the electronic device. For example, the electronic device may include more or fewer components (such as a network interface and a display apparatus) than those shown in FIG. 10, or have a configuration different from that shown in FIG. 10.

The memory 1002 may be configured to store a software program and module, for example, a program instruction/module corresponding to the method and the apparatus for generating natural language description in the embodiments of the present disclosure. The processor 1004 runs the software program and module stored in the memory 1002, to perform various functional applications and data processing, that is, implement the control method for target components. The memory 1002 may include a high-speed random memory, and may further include a non-volatile memory such as one or more magnetic storage apparatuses, a flash memory, or another non-volatile solid-state memory. In some embodiments, the memory 1002 may further include memories remotely arranged relative to the processor 1004, and the remote memories may be connected to a terminal over a network. Examples of the network include, but are not limited to, the Internet, an intranet, a local area network, a mobile communication network, and a combination thereof.

The transmission apparatus 1010 is configured to receive or transmit data over a network. Specific examples of the foregoing network may include a wired network and a wireless network. In an example, the transmission apparatus 1010 includes a network interface controller (NIC). The NIC may be connected to another network device and a router through a network cable, so as to communicate with the Internet or a local area network. In an example, the transmission apparatus 1010 is a radio frequency (RF) module, configured to communicate with the Internet in a wireless manner.

The memory 1002 is configured to store an application.

A storage medium is further provided according to an embodiment of the present disclosure. The storage medium stores a computer program. The computer program is executed to perform steps in any one of the foregoing method embodiments.

Optionally, in this embodiment, the storage medium may be configured to store a computer program for performing the following steps S1 to S3.

In S 1, a media object is processed by using multiple natural language description models, to obtain first feature vectors outputted by the natural language description models. The first feature vectors outputted by the natural language description models belong to different feature types.

In S2, the first feature vectors outputted by the natural language description models are fused, to obtain a second feature vector.

In S3, target natural language description is generated according to the second feature vector. The target natural language description expresses the media object in natural language.

Optionally, the storage medium is further configured to store a computer program for performing steps included in the methods according to the foregoing embodiments, and details are not described again in this embodiment.

Optionally, in this embodiment, a person of ordinary skill in the art may understand that all or some of the steps of the methods in the foregoing embodiments may be implemented by a program instructing relevant hardware of the terminal device. The program may be stored in a computer-readable storage medium, and the storage medium may include a flash memory, a read-only memory (ROM), a random access memory (RAM), a magnetic disk, an optical disc, or the like.

The sequence numbers of the embodiments of the present disclosure are merely for description purpose, and do not indicate the preference among the embodiments.

In a case that the integrated unit in the foregoing embodiments is implemented in the form of a software functional unit and sold or used as an independent product, the integrated unit may be stored in the foregoing computer-readable storage medium. Based on such an understanding, the technical solutions of the present disclosure essentially, or the part contributing to the conventional technology, or all or some of the technical solutions may be implemented in a form of a software product. The computer software product is stored in a storage medium and includes multiple instructions for instructing one or more computer devices (which may be a personal computer, a server, a network device, or the like) to perform all or some of the steps of the methods described in the embodiments of the present disclosure.

**Claims**

1. A method for generating natural language description, applicable to an electronic device, **characterized in that** the method comprises:

   processing a media object by using a plurality of natural language description models, to obtain a plurality of first feature vectors corresponding to a plurality of feature types; fusing the plurality of first feature vectors to obtain a second feature vector; and generating natural language description for the media object according to the second feature vector, wherein the natural language description expresses the media object in natural language, wherein the media object comprises a plurality of blocks, each first feature vector in the plurality of first feature vectors comprises a plurality of fourth features in one-to-one correspondence with the plurality of blocks, and wherein the fusing the plurality of first feature vectors to obtain a second feature vector comprises:

      extracting a plurality of feature sets in a one-to-one correspondence with the plurality of blocks from the plurality of first feature vectors, wherein each feature set in the plurality of feature sets comprises a fourth feature corresponding to one of the plurality of blocks in the plurality of first feature vectors; obtaining an average feature of each feature set in the plurality of feature sets, to obtain a plurality of average features in one-to-one correspondence with the plurality of blocks; and determining a feature vector comprising the plurality of average features as the second feature vector.

2. The method according to claim 1, wherein the processing a media object by using a plurality of natural language description models, to obtain a plurality of first feature vectors corresponding to a plurality of feature types, comprises:

   obtaining the media object, and determining a block comprised in the media object; inputting the block into each natural language description model of the plurality of natural language description models; and generating a first feature vector by using each natural language description model of the plurality of natural language description models, wherein the first feature vector comprises a first feature corresponding to the block.

3. The method according to claim 2, wherein the media object comprises a plurality of blocks, and the generating a first feature vector by using each natural language description model of the plurality of natural language description models comprises:

   processing the plurality of blocks by using a feature extraction model comprised in each of the natural language description models, to extract a plurality of first features; obtaining sequence information of the plurality of blocks, wherein the sequence information indicates a sequence of the plurality of blocks in the media block; and encoding the plurality of first features sequentially according to the sequence information, to obtain the first feature vector.

4. The method according to claim 3, wherein each of the natural language description models comprises a plurality of feature extraction models, the feature extraction models correspond to different feature types, and the processing the plurality of blocks by using a feature extraction model comprised in each natural language description model to extract the plurality of first features comprises:

   inputting the plurality of blocks into each of the plurality of feature extraction models comprised in each of the natural language description models, and obtaining a set of second features outputted by each of the feature extraction models, to obtain a plurality of sets of second features, wherein each set of second features in the plurality of sets of second features comprise features in a one-to-one correspondence with the blocks; and fusing features corresponding to a same block among the plurality of sets of second features to obtain the plurality of first features.

5. The method according to claim 3, wherein the encoding the plurality of first features sequentially according to the sequence information, to obtain the first feature vector comprises:

inputting the first features into a sequential encoder according to the sequence information; generating a time series feature vector by using the sequential encoder; processing the time series feature vector by using an attention mechanism model, to obtain a plurality of third features, wherein the attention mechanism model is configured to determine a weighted feature corresponding to each block according to a correlation between the block and a block feature; and processing the plurality of third features by using a decoder model comprised in each natural language description model, to generate the first feature vector.

6. The method according to claim 1, wherein the media object comprises a first quantity of blocks, the second feature vector comprises a first quantity of features corresponding to the first quantity of blocks, and the generating natural language description according to the second feature vector comprises:

processing the first quantity of features by using an objective function, to obtain a second quantity of words that maximize the objective function, wherein the objective function is a function for obtaining a word probability distribution; and integrating the second quantity of words into a sentence, and determining the sentence as the natural language description.

7. The method according to claim 1, wherein before the processing a media object by using a plurality of natural language description models, to obtain a plurality of first feature vectors, the method further comprises:

training each model of a plurality of initial natural language description models by using a sample, to obtain a plurality of first models whose first loss function meets a first preset condition, wherein the first loss function is configured according to each model of the plurality of initial natural language description models; training each joint model of a plurality of joint models by using the sample, to obtain a plurality of second models whose second loss function meets a second preset condition, wherein each joint model of the plurality of joint models is obtained by cascading one of the first models and a reconstructor model, wherein the reconstructor model is configured to reconstruct a feature of the sample according to a description result outputted by the first model, and the second loss function is configured according to the joint model; and training the plurality of second models, to obtain a plurality of natural language description models whose evaluation parameter meets a third preset condition.

8. An apparatus for generating natural language description, **characterized in that** the apparatus comprises:

a processing module (82), configured to process a media object by using a plurality of natural language description models, to obtain a plurality of first feature vectors corresponding to a plurality of feature types; a fusion module (84), configured to fuse the plurality of first feature vectors, to obtain a second feature vector; and a generation module (86), configured to generate natural language description for the media object according to the second feature vector, wherein the natural language description expresses the media object in natural language, wherein the media object comprises a plurality of blocks, each of the first feature vectors comprise a plurality of fourth features in one-to-one correspondence with the plurality of blocks, and wherein the fusion module (84) comprises:

an extraction unit, configured to extract a plurality of feature sets in one-to-one correspondence with the plurality of blocks from the plurality of first feature vectors, wherein each feature set in the plurality of feature sets comprises a fourth feature corresponding to one of the plurality of blocks in the plurality of first feature vectors; a second obtaining unit, configured to obtain an average feature of each feature set in the plurality of feature sets, to obtain a plurality of average features in a one-to-one correspondence with the plurality of blocks; and a determining unit, configured to determine a feature vector comprising the plurality of average features as the second feature vector.

9. The apparatus according to claim 8, wherein the processing module (82) comprises:

a first obtaining unit, configured to obtain the media object, and determine a block comprised in the media object; a first input unit, configured to input the block into each natural language description model of the plurality of natural language description models; and a generation unit, configured to generate a first feature vector by using each natural language description model of the plurality of natural language description models, wherein the first feature vector comprises a first feature corresponding to the block.

10. The apparatus according to claim 8, wherein the media object comprises a first quantity of blocks, the second feature vector comprises a first quantity of features corresponding to the first quantity of blocks, and the generation module (86) comprises:

a processing unit, configured to process the first quantity of features by using an objective function, to obtain a second quantity of words that maximize the objective function, wherein the objective function is a function for obtaining a word probability distribution; and

an integration unit, configured to integrate the second quantity of words into a sentence, and determine the sentence as the natural language description.

11. The apparatus according to claim 8, further comprising:

a first training module, configured to train each model of a plurality of initial natural language description models by using a sample, to obtain a plurality of first models whose first loss function meets a first preset condition, wherein the first loss function is configured according to each model of the plurality of initial natural language description models;

a second training module, configured to train each joint model of a plurality of joint models by using the sample, to obtain a plurality of second models whose second loss function meets a second preset condition, wherein each joint model of the plurality of joint models is obtained by cascading one of the first models and a reconstructor model, the reconstructor model is configured to reconstruct a feature of the sample according to a description result outputted by an optimized model, and the second loss function is configured according to the each joint model; and

a third training module, configured to train the plurality of second models, to obtain a plurality of natural language description models whose evaluation parameter meets a third preset condition.

12. A storage medium, storing a computer program, wherein the computer program, when executed, causes the computer to perform the method according to any one of claims 1 to 7.

13. An electronic device, comprising a memory and a processor (1002), wherein the memory stores a computer program, and the processor (1002) is configured to perform the method according to any one of claims 1 to 7 by executing the computer program.

**Patentansprüche**

1. Verfahren zum Erzeugen einer natürlichsprachlichen Beschreibung, anwendbar auf ein elektronisches Gerät, **dadurch gekennzeichnet, dass** das Verfahren umfasst:

Verarbeiten eines Medienobjekts unter Verwendung mehrerer natürlichsprachlicher Beschreibungsmodelle, um mehrere erste Merkmalsvektoren zu erhalten, die mehreren Merkmalstypen entsprechen;

Verschmelzen der mehreren ersten Merkmalsvektoren, um einen zweiten Merkmalsvektor zu erhalten; und

Erzeugen einer natürlichsprachlichen Beschreibung für das Medienobjekt gemäß dem zweiten Merkmalsvektor, wobei die natürlichsprachliche Beschreibung das Medienobjekt in natürlicher Sprache ausdrückt,

wobei das Medienobjekt mehrere Blöcke umfasst, jeder erste Merkmalsvektor der mehreren ersten Merkmalsvektoren mehrere vierte Merkmale in Eins-zu-Eins-Entsprechung mit den mehreren Blöcken umfasst, und wobei das Verschmelzen der mehreren Merkmalsvektoren, um einen zweiten Merkmalsvektor zu erhalten, umfasst:

Extrahieren mehrerer Merkmalssätze in einer Eins-zu-Eins-Entsprechung mit den mehreren Blöcken aus den mehreren ersten Merkmalsvektoren, wobei jeder Merkmalssatz der mehreren Merkmalssätze ein viertes Merkmal umfasst, das einem der mehreren Blöcke der mehreren ersten Merkmalsvektoren entspricht;

Ermitteln eines Durchschnittsmerkmals jedes Merkmalssatzes der mehreren Merkmalssätze, um mehrere Durchschnittsmerkmale in Eins-zu-Eins-Entsprechung mit den mehreren Blöcken zu ermitteln; und

Bestimmen eines Merkmalsvektors, der die mehreren Durchschnittsmerkmale enthält, als den zweiten Merkmalsvektor.

2. Verfahren nach Anspruch 1, wobei das Verarbeiten eines Medienobjekts unter Verwendung mehrerer natürlichsprachlicher Beschreibungsmodelle, um mehrere erste Merkmalsvektoren zu erhalten, die mehreren Merkmalstypen entsprechen, umfasst:

Ermitteln des Medienobjekts und Bestimmen eines Blocks, der in dem Medienobjekt enthalten ist;

Eingeben des Blocks in jedes natürlichsprachliche Beschreibungsmodell der mehreren natürlichsprachlichen Beschreibungsmodelle; und

Erzeugen eines ersten Merkmalsvektors unter Verwendung jedes natürlichsprachlichen Beschreibungsmodells der mehreren natürlichsprachlichen Beschreibungsmodellen, wobei der erste Merkmalsvektor ein dem Block entsprechendes erstes Merkmal umfasst.

3. Verfahren nach Anspruch 2, wobei das Medienobjekt mehrere Blöcke umfasst, und das Erzeugen eines ersten Merkmalsvektors unter Verwendung jedes natürlichsprachlichen Beschreibungsmodells der mehreren natürlichsprachlichen Beschreibungsmodelle umfasst:

Verarbeiten der mehreren Blöcke unter Verwendung eines Merkmalsextraktionsmodells, das in jedem der natürlichsprachlichen Beschreibungsmodelle enthalten ist, um mehrere erste Merkmale zu extrahieren;

Erhalten von einer Sequenzinformation der mehreren Blöcke, wobei die Sequenzinformation eine Sequenz der mehreren Blöcke in dem Medienblock anzeigt; und

Kodieren der mehreren ersten Merkmale sequentiell gemäß der Sequenzinformation, um den ersten Merkmalsvektor zu erhalten.

4. Verfahren nach Anspruch 3, wobei jedes der natürlichsprachlichen Beschreibungsmodelle mehrere Merkmalsextraktionsmodelle umfasst, die Merkmalsextraktionsmodelle verschiedenen Merkmalstypen entsprechen und die Verarbeitung der mehreren Blöcke unter Verwendung eines Merkmalsextraktionsmodells, das in jedem natürlichsprachlichen Beschreibungsmodell enthalten ist, um die mehreren ersten Merkmale zu extrahieren, umfasst:

Eingeben der mehreren Blöcke in jedes der mehreren Merkmalsextraktionsmodelle, die in jedem der natürlichsprachlichen Beschreibungsmodelle enthalten sind, und Erhalten eines Satzes von zweiten Merkmalen, die von jedem der Merkmalsextraktionsmodelle ausgegeben werden, um mehrere Sätze von zweiten Merkmalen zu erhalten, wobei jeder Satz von zweiten Merkmalen der mehreren Sätze von zweiten Merkmalen Merkmale in einer Eins-zu-Eins-Beziehung mit den Blöcken umfasst; und

Verschmelzen von Merkmalen, die einem gleichen Block unter den mehreren Sätzen von zweiten Merkmalen entsprechen, um die mehreren ersten Merkmale zu erhalten.

5. Verfahren nach Anspruch 3, wobei das Kodieren der mehreren ersten Merkmale sequentiell gemäß der Sequenzinformation, um den ersten Merkmalsvektor zu erhalten, umfasst:

Eingeben der ersten Merkmale in einen sequentiellen Kodierer entsprechend der Sequenzinformation;

Erzeugen eines Zeitreihenmerkmalsvektors unter Verwendung des sequentiellen Kodierers;

Verarbeiten des Zeitreihenmerkmalsvektors unter Verwendung eines Aufmerksamkeitsmechanismusmodells, um mehrere dritte Merkmale zu erhalten, wobei das Aufmerksamkeitsmechanismusmodell konfiguriert ist, um ein gewichtetes Merkmal, das jedem Block entspricht, gemäß einer Korrelation zwischen dem Block und einem Blockmerkmal zu bestimmen; und

Verarbeiten der mehreren dritten Merkmale unter Verwendung eines Dekodermodells, das in jedem natürlichsprachlichen Beschreibungsmodell enthalten ist, um den ersten Merkmalsvektor zu erzeugen.

6. Verfahren nach Anspruch 1, wobei das Medienobjekt eine erste Menge von Blöcken umfasst, der zweite Merkmalsvektor eine erste Menge von Merkmalen umfasst, die der ersten Menge von Blöcken entspricht, und das Erzeugen einer natürlichsprachlichen Beschreibung gemäß dem zweiten Merkmalsvektor umfasst:

Verarbeiten der ersten Menge von Merkmalen unter Verwendung einer Zielfunktion, um eine zweite Menge von Wörtern zu erhalten, die die Zielfunktion maximieren, wobei die Zielfunktion eine Funktion zum Erhalten einer Wortwahrscheinlichkeitsverteilung ist; und

Integrieren der zweiten Menge von Wörtern in einen Satz, und Bestimmen des Satzes als die natürlichsprachliche Beschreibung.

7. Verfahren nach Anspruch 1, wobei das Verfahren vor dem Verarbeiten eines Medienobjekts unter Verwendung mehrerer natürlichsprachlicher Beschreibungsmodelle, um mehrere erste Merkmalsvektoren zu erhalten, ferner umfasst:

Trainieren jedes Modells von mehreren initialen natürlichsprachlichen Beschreibungsmodellen unter Verwendung einer Probe, um mehrere erste Modelle zu erhalten, deren erste Verlustfunktion eine erste vorgegebene Bedingung erfüllt, wobei die erste Verlustfunktion entsprechend jedem Modell der mehreren initialen natürlichsprachlichen Beschreibungsmodelle konfiguriert ist;

Trainieren jedes gemeinsamen Modells mehrerer gemeinsamer Modelle unter Verwendung der Probe, um mehrere zweite Modelle zu erhalten, deren zweite Verlustfunktion eine zweite vorgegebene Bedingung erfüllt, wobei jedes gemeinsame Modell der mehreren gemeinsamen Modelle durch Kaskadieren eines der ersten Modelle und eines Rekonstruktionsmodells erhalten wird, wobei das Rekonstruktionsmodell so konfiguriert ist, dass es ein Merkmal der Probe gemäß einem von dem ersten Modell ausgegebenen Beschreibungsergebnis rekonstruiert, und die zweite Verlustfunktion gemäß dem gemeinsamen Modell konfiguriert ist; und Trainieren der mehreren zweiten Modelle, um mehrere natürlichsprachliche Beschreibungsmodelle zu erhalten, deren Bewertungsparameter eine dritte vorgegebene Bedingung erfüllen.

8. Vorrichtung zum Erzeugen einer natürlichsprachlichen Beschreibung, **dadurch gekennzeichnet, dass** die Vorrichtung umfasst:

ein Verarbeitungsmodul (82), das so konfiguriert ist, dass es ein Medienobjekt unter Verwendung mehrerer natürlichsprachlicher Beschreibungsmodelle verarbeitet, um mehrere erste Merkmalsvektoren zu erhalten, die mehreren Merkmalstypen entsprechen; ein Verschmelzungsmodul (84), das so konfiguriert ist, dass es die mehreren ersten Merkmalsvektoren verschmelzt, um einen zweiten Merkmalsvektor zu erhalten; und ein Erzeugungsmodul (86), das so konfiguriert ist, dass es eine natürlichsprachliche Beschreibung für das Medienobjekt gemäß dem zweiten Merkmalsvektor erzeugt, wobei die natürlichsprachliche Beschreibung das Medienobjekt natürlichsprachlich ausdrückt, wobei das Medienobjekt mehrere Blöcke umfasst, wobei jeder der ersten Merkmalsvektoren mehrere vierte Merkmale in Eins-zu-Eins-Entsprechung mit den mehreren Blöcken umfasst, und wobei das Verschmelzungsmodul (84) umfasst:

eine Extraktionseinheit, die so konfiguriert ist, dass sie mehrere Merkmalssätze in Eins-zu-Eins-Entsprechung mit den mehreren Blöcken aus den mehreren ersten Merkmalsvektoren extrahiert, wobei jeder Merkmalssatz der mehreren Merkmalssätze ein viertes Merkmal umfasst, das einem der mehreren Blöcke der mehreren ersten Merkmalsvektoren entspricht; eine zweite Ermittlungseinheit, die so konfiguriert ist, dass sie ein durchschnittliches Merkmal jedes Merkmalssatzes der mehreren Merkmalssätze ermittelt, um mehrere Durchschnittsmerkmale in einer Eins-zu-Eins-Entsprechung mit den mehreren Blöcken zu ermitteln; und eine Bestimmungseinheit, die konfiguriert ist, um einen Merkmalsvektor zu bestimmen, der die mehreren Durchschnittsmerkmale als den zweiten Merkmalsvektor umfasst.

9. Vorrichtung nach Anspruch 8, wobei das Verarbeitungsmodul (82) Folgendes umfasst:

eine erste Ermittlungseinheit, die so konfiguriert ist, dass sie das Medienobjekt ermittelt und einen Block bestimmt, der in dem Medienobjekt enthalten ist; eine erste Eingabeeinheit, die so konfiguriert ist, dass sie den Block in jedes natürlichsprachliche Beschreibungsmodell der mehreren natürlichsprachlichen Beschreibungsmodelle eingibt; und eine Erzeugungseinheit, die so konfiguriert ist, dass sie einen ersten Merkmalsvektor unter Verwendung jedes natürlichsprachlichen Beschreibungsmodells der mehreren natürlichsprachlichen Beschreibungsmodelle erzeugt, wobei der erste Merkmalsvektor ein erstes Merkmal umfasst, das dem Block entspricht.

10. Vorrichtung nach Anspruch 8, wobei das Medienobjekt eine erste Menge von Blöcken umfasst, der zweite Merkmalsvektor eine erste Menge von Merkmalen umfasst, die der ersten Menge von Blöcken entspricht, und das Erzeugungsmodul (86) umfasst:

eine Verarbeitungseinheit, die konfiguriert ist, um die erste Menge von Merkmalen unter Verwendung einer Zielfunktion zu verarbeiten, um eine zweite Menge von Wörtern zu erhalten, die die Zielfunktion maximieren, wobei die Zielfunktion eine Funktion zum Erhalten einer Wortwahrscheinlichkeitsverteilung ist; und eine Integrationseinheit, die konfiguriert ist, um die zweite Menge von Wörtern in einen Satz zu integrieren und den Satz als die natürlichsprachliche Beschreibung zu bestimmen.

11. Vorrichtung nach Anspruch 8, ferner umfassend:

ein erstes Trainingsmodul, das so konfiguriert ist, dass es jedes Modell von mehreren initialen natürlichsprachlichen Beschreibungsmodellen unter Verwendung einer Probe trainiert, um mehrere erste Modelle zu erhalten, deren erste Verlustfunktion eine erste vorgegebene Bedingung erfüllt, wobei die erste Verlustfunktion entsprechend jedem Modell der mehreren initialen natürlichsprachlichen Beschreibungsmodelle konfiguriert ist;

ein zweites Trainingsmodul, das so konfiguriert ist, dass es jedes gemeinsame Modell mehrerer gemeinsamer Modelle unter Verwendung der Probe trainiert, um mehrere zweite Modelle zu erhalten, deren zweite Verlustfunktion eine zweite vorgegebene Bedingung erfüllt, wobei jedes gemeinsame Modell der mehreren gemeinsamen Modellen durch Kaskadierung eines der ersten Modelle und eines Rekonstruktionsmodells erhalten wird, wobei das Rekonstruktionsmodell so konfiguriert ist, dass es ein Merkmal der Probe gemäß einem von einem optimierten Modell ausgegebenen Beschreibungsergebnis rekonstruiert, und die zweite Verlustfunktion gemäß jedem gemeinsamen Modell konfiguriert ist; und

ein drittes Trainingsmodul, das so konfiguriert ist, dass es die mehreren zweiten Modelle trainiert, um mehrere natürlichsprachliche Beschreibungsmodelle zu erhalten, deren Bewertungsparameter eine dritte vorgegebene Bedingung erfüllen.

12. Speichermedium, das ein Computerprogramm speichert, wobei das Computerprogramm, wenn es ausgeführt wird, den Computer veranlasst, das Verfahren nach einem der Ansprüche 1 bis 7 durchzuführen.

13. Elektronische Vorrichtung, die einen Speicher und einen Prozessor (1002) umfasst, wobei der Speicher ein Computerprogramm speichert und der Prozessor (1002) so konfiguriert ist, dass er das Verfahren nach einem der Ansprüche 1 bis 7 durch Ausführen des Computerprogramms durchführt.

## Revendications

1. Procédé pour la génération d'une description en langage naturel, applicable à un dispositif électronique, **caractérisé en ce que** le procédé comprend :

   le traitement d'un objet multimédia en utilisant une pluralité de modèles de description en langage naturel, pour obtenir une pluralité de premiers vecteurs de caractéristiques correspondant à une pluralité de types de caractéristiques ;
   la fusion de la pluralité de premiers vecteurs de caractéristiques pour obtenir un deuxième vecteur de caractéristiques ; et
   la génération d'une description en langage naturel pour l'objet multimédia selon le deuxième vecteur de caractéristiques, dans lequel la description en langage naturel exprime l'objet multimédia en langage naturel,

   dans lequel l'objet multimédia comprend une pluralité de blocs, chaque premier vecteur de caractéristiques dans la pluralité de premiers vecteurs de caractéristiques comprend une pluralité de quatrièmes caractéristiques en correspondance biunivoque avec la pluralité de blocs, et dans lequel la fusion de la pluralité de premiers vecteurs de caractéristiques pour obtenir un deuxième vecteur de caractéristiques comprend :

   l'extraction d'une pluralité d'ensembles de caractéristiques dans une correspondance biunivoque avec la pluralité de blocs à partir de la pluralité de premiers vecteurs de caractéristiques, dans lequel chaque ensemble de caractéristiques dans la pluralité d'ensembles de caractéristiques comprend une quatrième caractéristique correspondant à l'un de la pluralité de blocs dans la pluralité de premiers vecteurs de caractéristiques ;
   l'obtention d'une caractéristique moyenne de chaque ensemble de caractéristiques dans la pluralité d'ensembles de caractéristiques, pour obtenir une pluralité de caractéristiques moyennes en correspondance biunivoque avec la pluralité de blocs ; et
   la détermination d'un vecteur de caractéristiques comprenant la pluralité de caractéristiques moyennes comme étant le deuxième vecteur de caractéristiques.

2. Procédé selon la revendication 1, dans lequel le traitement d'un objet multimédia en utilisant une pluralité de modèles de description en langage naturel, pour obtenir une pluralité de premiers vecteurs de caractéristiques correspondant à une pluralité de types de caractéristiques, comprend :

   l'obtention de l'objet multimédia, et la détermination d'un bloc compris dans l'objet multimédia ;
   l'entrée du bloc dans chaque modèle de description en langage naturel de la pluralité de modèles de description en langage naturel ; et
   la génération d'un premier vecteur de caractéristiques en utilisant chaque modèle de description en langage naturel de la pluralité de modèles de description en langage naturel, dans lequel le premier vecteur de caractéristiques comprend une première caractéristique correspondant au bloc.

3. Procédé selon la revendication 2, dans lequel l'objet multimédia comprend une pluralité de blocs, et la génération d'un premier vecteur de caractéristiques en utilisant chaque modèle de description en langage naturel de la pluralité de modèles de description en langage naturel comprend :

le traitement de la pluralité de blocs en utilisant un modèle d'extraction de caractéristiques compris dans chacun des modèles de description en langage naturel, pour extraire une pluralité de premières caractéristiques ;
l'obtention d'informations de séquence de la pluralité de blocs, dans lequel les informations de séquence indiquent une séquence de la pluralité de blocs dans le bloc multimédia ; et
le codage de la pluralité de premières caractéristiques en séquence selon les informations de séquence, pour obtenir le premier vecteur de caractéristiques.

4. Procédé selon la revendication 3, dans lequel chacun des modèles de description en langage naturel comprend une pluralité de modèles d'extraction de caractéristiques, les modèles d'extraction de caractéristiques correspondent à différents types de caractéristiques, et le traitement de la pluralité de blocs en utilisant un modèle d'extraction de caractéristiques compris dans chaque modèle de description en langage naturel pour extraire la pluralité de premières caractéristiques comprend :

l'entrée de la pluralité de blocs dans chacun de la pluralité de modèles d'extraction de caractéristiques compris dans chacun des modèles de description en langage naturel, et l'obtention d'un ensemble de deuxièmes caractéristiques délivrées en sortie par chacun des modèles d'extraction de caractéristiques, pour obtenir une pluralité d'ensembles de deuxièmes caractéristiques, dans lequel chaque ensemble de deuxièmes caractéristiques dans la pluralité d'ensembles de deuxièmes caractéristiques comprend des caractéristiques dans une correspondance biunivoque avec les blocs ; et
la fusion de caractéristiques correspondant à un même bloc parmi la pluralité d'ensembles de deuxièmes caractéristiques pour obtenir la pluralité de premières caractéristiques.

5. Procédé selon la revendication 3, dans lequel le codage de la pluralité de premières caractéristiques en séquence selon les informations de séquence, pour obtenir le premier vecteur de caractéristiques comprend :

l'entrée des premières caractéristiques dans un codeur séquentiel selon les informations de séquence ;
la génération d'un vecteur de caractéristiques en série chronologique en utilisant le codeur séquentiel ;

le traitement du vecteur de caractéristiques en série chronologique en utilisant un modèle de mécanisme d'attention, pour obtenir une pluralité de troisièmes caractéristiques, dans lequel le modèle de mécanisme d'attention est configuré pour déterminer une caractéristique pondérée correspondant à chaque bloc selon une corrélation entre le bloc et une caractéristique de bloc ; et
le traitement de la pluralité de troisièmes caractéristiques en utilisant un modèle de décodeur compris dans chaque modèle de description en langage naturel, pour générer le premier vecteur de caractéristiques.

6. Procédé selon la revendication 1, dans lequel l'objet multimédia comprend une première quantité de blocs, le deuxième vecteur de caractéristiques comprend une première quantité de caractéristiques correspondant à la première quantité de blocs, et la génération d'une description en langage naturel selon le deuxième vecteur de caractéristiques comprend :

le traitement de la première quantité de caractéristiques en utilisant une fonction objective, pour obtenir une deuxième quantité de mots qui maximisent la fonction objective, dans lequel la fonction objective est une fonction pour l'obtention d'une distribution de probabilité de mot ; et
l'intégration de la deuxième quantité de mots dans une phrase, et la détermination de la phrase comme étant la description en langage naturel.

7. Procédé selon la revendication 1, dans lequel avant le traitement d'un objet multimédia en utilisant une pluralité de modèles de description en langage naturel, pour obtenir une pluralité de premiers vecteurs de caractéristiques, le procédé comprend en outre :

l'entraînement de chaque modèle d'une pluralité de modèles de description en langage naturel initiaux en utilisant un échantillon, pour obtenir une pluralité de premiers modèles dont la première fonction de perte satisfait une première condition prédéfinie, dans lequel la première fonction de perte est configurée selon chaque modèle de la pluralité de modèles de description en langage naturel initiaux ;
l'entraînement de chaque modèle conjoint d'une pluralité de modèles conjoints en utilisant l'échantillon, pour obtenir une pluralité de deuxièmes modèles dont la deuxième fonction de perte satisfait une deuxième condition prédéfinie, dans lequel chaque modèle joint de la pluralité de modèles conjoints est obtenu par la mise en cascade de l'un des premiers modèles et d'un modèle reconstructeur, dans lequel le modèle reconstructeur est configuré pour reconstruire une caractéristique de l'échantillon selon un résultat de description délivré en sortie par le premier modèle, et la deuxième fonction de perte est configurée selon le modèle conjoint ; et

l'entraînement de la pluralité de deuxièmes modèles, pour obtenir une pluralité de modèles de description en langage naturel dont le paramètre d'évaluation satisfait une troisième condition prédéfinie.

8. Appareil pour la génération d'une description en langage naturel, **caractérisé en ce que** l'appareil comprend :

un module de traitement (82), configuré pour traiter un objet multimédia en utilisant une pluralité de modèles de description en langage naturel, pour obtenir une pluralité de premiers vecteurs de caractéristiques correspondant à une pluralité de types de caractéristiques ;

un module de fusion (84), configuré pour fusionner la pluralité de premiers vecteurs de caractéristiques, pour obtenir un deuxième vecteur de caractéristiques ; et

un module de génération (86), configuré pour générer une description en langage naturel pour l'objet multimédia selon le deuxième vecteur de caractéristiques, dans lequel la description en langage naturel exprime l'objet multimédia en langage naturel,

dans lequel l'objet multimédia comprend une pluralité de blocs, chacun des premiers vecteurs de caractéristiques comprend une pluralité de quatrièmes caractéristiques en correspondance biunivoque avec la pluralité de blocs, et dans lequel le module de fusion (84) comprend :

une unité d'extraction, configurée pour extraire une pluralité d'ensembles de caractéristiques en correspondance biunivoque avec la pluralité de blocs à partir de la pluralité de premiers vecteurs de caractéristiques, dans lequel chaque ensemble de caractéristiques dans la pluralité d'ensembles de caractéristiques comprend une quatrième caractéristique correspondant à l'un de la pluralité de blocs dans la pluralité de premiers vecteurs de caractéristiques ;

une deuxième unité d'obtention, configurée pour obtenir une caractéristique moyenne de chaque ensemble de caractéristiques dans la pluralité d'ensembles de caractéristiques, pour obtenir une pluralité de caractéristiques moyennes dans une correspondance biunivoque avec la pluralité de blocs ; et

une unité de détermination, configurée pour déterminer un vecteur de caractéristiques comprenant la pluralité de caractéristiques moyennes comme étant le deuxième vecteur de caractéristiques.

9. Appareil selon la revendication 8, dans lequel le module de traitement (82) comprend :

une première unité d'obtention, configurée pour obtenir l'objet multimédia, et déterminer un bloc compris dans l'objet multimédia ;

une première unité d'entrée, configurée pour entrer le bloc dans chaque modèle de description en langage naturel de la pluralité de modèles de description en langage naturel ; et

une unité de génération, configurée pour générer un premier vecteur de caractéristiques en utilisant chaque modèle de description en langage naturel de la pluralité de modèles de description en langage naturel, dans lequel le premier vecteur de caractéristiques comprend une première caractéristique correspondant au bloc.

10. Appareil selon la revendication 8, dans lequel l'objet multimédia comprend une première quantité de blocs, le deuxième vecteur de caractéristiques comprend une première quantité de caractéristiques correspondant à la première quantité de blocs, et le module de génération (86) comprend :

une unité de traitement, configurée pour traiter la première quantité de caractéristiques en utilisant une fonction objective, pour obtenir une deuxième quantité de mots qui maximisent la fonction objective, dans lequel la fonction objective est une fonction pour l'obtention d'une distribution de probabilité de mot ; et

une unité d'intégration, configurée pour intégrer la deuxième quantité de mots dans une phrase, et déterminer la phrase comme étant la description en langage naturel.

11. Appareil selon la revendication 8, comprenant en outre :

un premier module d'entraînement, configuré pour entraîner chaque modèle d'une pluralité de modèles de description en langage naturel initiaux en utilisant un échantillon, pour obtenir une pluralité de premiers modèles dont la première fonction de perte satisfait une première condition prédéfinie, dans lequel la première fonction de perte est configurée selon chaque modèle de la pluralité de modèles de description en langage naturel initiaux ;

un deuxième module d'entraînement, configuré pour entraîner chaque modèle conjoint d'une pluralité de modèles conjoints en utilisant l'échantillon, pour obtenir une pluralité de deuxièmes modèles dont la deuxième fonction de perte satisfait une deuxième condition prédéfinie, dans lequel chaque modèle joint de la pluralité de modèles conjoints est obtenu par la mise en cascade de l'un des premiers modèles et d'un modèle reconstructeur, le modèle reconstructeur est configuré pour reconstruire une caractéristique de l'échantillon selon un résultat de description délivré en sortie par un modèle optimisé, et la deuxième fonction de perte est configurée selon chaque modèle conjoint ; et

un troisième module d'entraînement, configuré pour entraîner la pluralité de deuxièmes modèles, pour obtenir une pluralité de modèles de description en langage naturel dont le paramètre d'évaluation satisfait une troisième condition prédéfinie.

12. Support de stockage, stockant un programme d'ordinateur, dans lequel le programme d'ordinateur, lors de son exécution, amène l'ordinateur à réaliser le procédé selon l'une quelconque des revendications 1 à 7.

13. Dispositif électronique, comprenant une mémoire et un processeur (1002), dans lequel la mémoire stocke un programme d'ordinateur, et le processeur (1002) est configuré pour réaliser le procédé selon l'une quelconque des revendications 1 à 7 par l'exécution du programme d'ordinateur.

Process a media object by using multiple natural language description models, to obtain multiple first feature vectors outputted by the natural language description models — S102

Fuse the first feature vectors outputted by the natural language description models, to obtain a second feature vector — S104

Generate target natural language description according to the second feature vector, the target natural language description expressing the media resource in natural language — S106

**FIG. 1**

202

204

Generate

Media resource ⇒ Multiple natural language description models ⇒ Multiple first feature vectors — Fuse ⇒ Second feature vector — Generate ⇒ Target natural language description information

**FIG. 2**

**FIG. 3**

**FIG. 4**

**FIG. 5**

**FIG. 6**

**FIG. 7**

Processing module 82

Fusion module 84

Generation module 86

Apparatus for generating natural
language description

**FIG. 8**

**FIG. 9**

1006          1002

Sensor     Processor

                              1008

                          Encoder          1010

            Memory   1004

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811409084

- WO 2018124309 A1